# EUROPEAN PATENT APPLICATION

(11) **EP 3 981 992 A1**
(43) Date of publication of application: **13.04.2022**
(21) Application number: 20211602.6
(22) Date of filing: 03.12.2020
(51) Int. Cl.: F16B 25/00, F16B 25/10, F16B 5/02

(54) **CONCRETE SCREW**

(30) Priority: 12.10.2020 TW 109135210
(71) Applicant: Hsu, Kuo-Tai, Tainan City 710 (TW); Hsu, Ming-Hao, 710 Tainan City (TW)
(72) Inventor: Hsu, Kuo-Tai, Tainan City 710 (TW); Hsu, Ming-Hao, 710 Tainan City (TW)
(74) Representative: Jannig & Repkow Patentanwälte PartG mbB

(57) **Abstract**

A concrete screw (30) is adapted to be driven into a hole (44) predrilled in a concrete structure (42) and includes a head (32), a shank (34) extending from the head (32), a thread (36) formed on the shank (34), and a plurality of bump units (50). The shank (34) includes front and rear segments (38, 40) spaced along a longitudinal axis (X). The bump units (50) are distributed on at least the front segment (38) of the shank (34) and staggered along the longitudinal axis (X). Each bump unit (50) includes a plurality of bumps (52) constitute an inclined pattern (54) relative to the longitudinal axis (X). Each bump (52) protrudes from the periphery of the shank (34). In the course of the screw (30) being driven into the hole (44), the bumps (52) pulverize concrete debris in the hole (44), and waste debris accumulates at a segment of the shank (34) on which the bump units (50) are distributed for development of a pressing segment and promotion of anti-pullout strength of the screw (30).

## Description

### BACKGROUND OF THE INVENTION

### 1. Field of the Invention

The present invention relates to a screw and, more particularly, to a concrete screw adapted to be driven into concrete or masonry structures.

### 2. Description of the Related Art

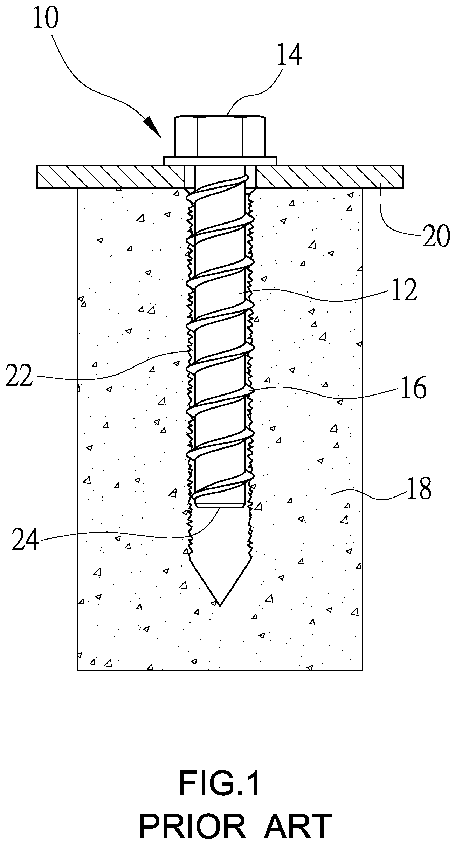

FIG. 1 illustrates a traditional concrete screw 10 including a shank 12, a head 14 formed at an end of the shank 12, and a thread 16 formed on the shank 12. The screw 10 is adapted to be fastened into a masonry (for example, brick) and/or a concrete structure (for example, concrete wall) 18 such that a board 20 or another construction component can be mounted on the concrete structure 18. Concretes based on gravels (coarse aggregates), sands (fine aggregates), cements and water, all of which are mixed proportionally, are short of ductility. Thus, in the operation of screwing the screw 10, an electric drill (not shown in FIG. 1) is used to first drill a hole 22 in the concrete structure 18. The hole 22 has a hole diameter greater than the shank diameter of the shank 12 but less than the major diameter of the thread 16. Next, the operator inserts a front end 24 of the shank 12 into the hole 22, taking a tool (not shown) to drive the head 14 to rotate, cutting the inner wall of the hole 22 by the thread 16 of the shank 12, and screwing the shank 12 into the hole 22 until the board 20 is approached or abutted by the head 14.

However, it is not unusual for the traditional concrete screw 10 to suffer strong screw-in frictions or weak pullout strength in use. Specifically, there will be a large number of concrete debris in the pre-drilled hole 22. Although the concrete debris in the pre-drilled hole can be cleaned for the first time by vacuuming, the concrete debris will rub against one another and make the inner wall of the predrilled hole coarser and more uneven. In the course of the screw 10 being driven into the hole 22, a great deal of irregular waste debris from cements of the concrete structure 18 cut by the thread 16 will accumulate in some cavities between the shank 12 and the coarse inner wall intermittently, resulting in severe wear of the thread 16 and weakened fastening strength.

### BRIEF SUMMARY OF THE INVENTION

Thus, an objective of the present invention is to provide a concrete screw with which a coarse inner wall in a predrilled hole can be polished and concrete debris can be well pulverized in the course of the screw being driven into the predrilled hole for protecting thread from abrasion due to the coarse inner wall and irregular debris in the drilled hole and for better fastening strength of the screw.

To achieve this and other objectives, a screw of the present invention is adapted to be driven into a hole in a concrete structure. The screw includes a head, a shank extending from the head and defining a longitudinal axis, a thread, and a plurality of first bump units. The shank includes a front segment and a rear segment spaced from the front segment along the longitudinal axis and located between the front segment and the head. The thread is spirally formed on the shank and includes a plurality of thread convolutions. Each thread convolution has a thread height. The plurality of first bump units are distributed on at least the front segment of the shank and spaced around the shank circumferentially. Each first bump unit includes a plurality of bumps spaced and staggered along the longitudinal axis. Each bump protrudes from a periphery of the shank in a radial direction of the shank and has a bump height in the radial direction which is less than the thread height.

In a form, the plurality of bumps of each first bump unit constitutes an inclined pattern or a helical pattern relative to the longitudinal axis.

In a form, a pitch is defined between two adjacent thread convolutions, with each bump extending along the longitudinal axis and having a bump length in a direction of the longitudinal axis which is less than the pitch.

In a form, an extension direction of the bump of each first bump unit is at an inclination angle with respect to the longitudinal axis, and the inclination angle of the bump is approximately equal to an inclination angle of the inclined pattern relative to the longitudinal axis.

In a form, each bump includes a rectangular bottom and a conic tip.

In a preferred form, the screw further includes a plurality of second bump units which are spaced around the shank circumferentially and distributed among the plurality of first bump units. Each second bump unit includes a plurality of bumps spaced and staggered along the longitudinal axis for development of an inclined pattern or a helical pattern relative to the longitudinal axis.

In a form, the bump of the second bump unit features its shape different from the shape of the bump of the first bump unit.

In a form, the bump of the second bump unit features its size different from the shape of the bump of the first bump unit.

The present invention will become clearer in light of the following detailed description of illustrative embodiments of this invention described in connection with the drawings.

### DESCRIPTION OF THE DRAWINGS

The illustrative embodiments may best be described by reference to the accompanying drawings where:
FIG. 1 shows a schematic view for a traditional concrete screw which is driven into a concrete structure.
FIG. 2 is a schematic view of a concrete screw according to a first embodiment of the present invention.
FIG. 3 is a sectional view taken along line 3-3 of FIG. 2.
FIG. 4 shows a partial, developed view of a front segment of the shank of the screw in FIG. 2.
FIG. 5 is a schematic view of the screw in FIG. 2 being fastened into a predrilled hole.
FIG. 6 is a schematic view of a concrete screw according to a second embodiment of the present invention.
FIG. 7 is a schematic view of a concrete screw according to a third embodiment of the present invention.
FIG. 8 is a schematic view of a concrete screw according to a fourth embodiment of the present invention.
FIG. 9 is a schematic view of a concrete screw according to a fifth embodiment of the present invention.

### DETAILED DESCRIPTION OF THE INVENTION

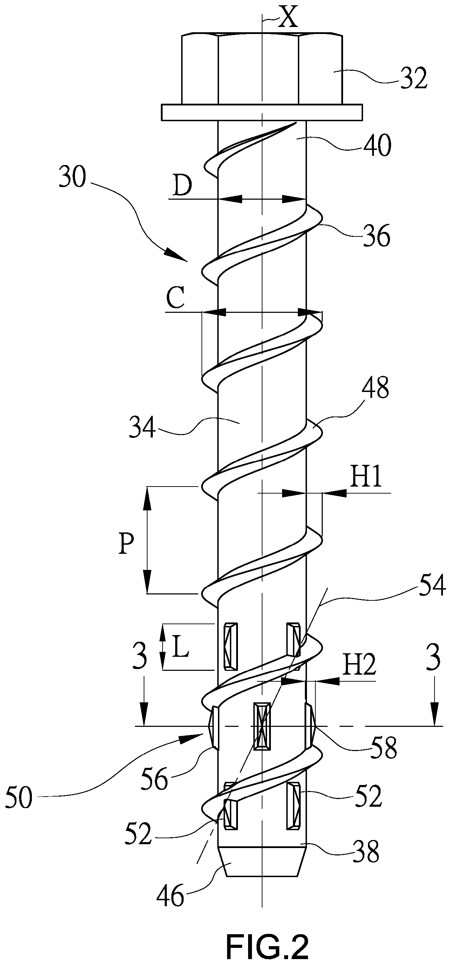

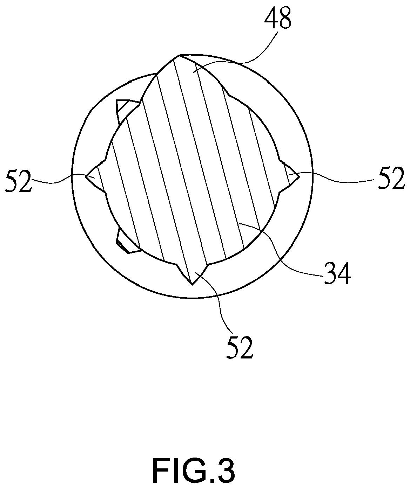

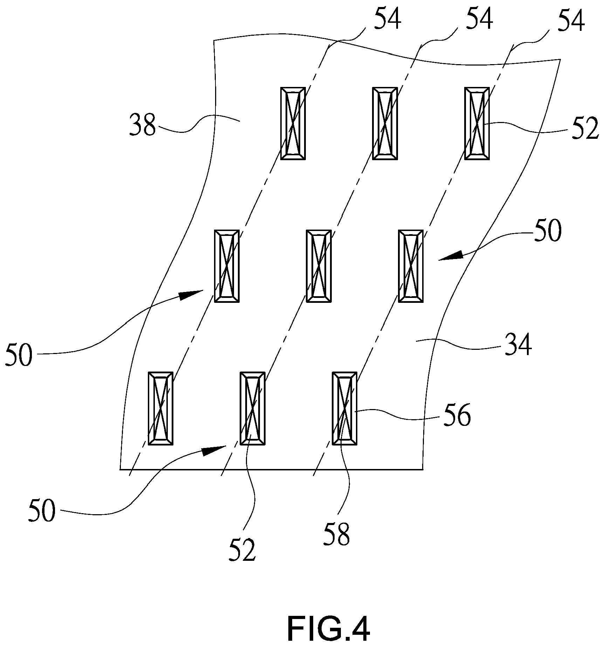

A concrete screw 30 according to a first embodiment of the present invention is shown in FIGS. 2 through 5 of the drawings and generally includes a head 32, a shank 34 extending from the head 32, and a thread 36 formed on the shank 34. The shank 34 defines a longitudinal axis X and includes front and rear segments 38 and 40 spaced from each other along the longitudinal axis X. The rear segment 40 is located between the front segment 38 and the head 32. The shank 34 has a shank diameter D. The front segment 38 and the rear segment 40 may have an identical shank diameter or distinct shank diameters. The head 32 is prepared for combination of a rotating tool (not shown in figures) with which a twisting force can be applied for screwing the shank 34 into a concrete structure 42. In general, an electric drill (not shown in figures) is first used to punch the concrete structure 42 for development of a hole 44 in which the shank 34 of the screw 30 is fastened. The thread 36 is spirally formed on an outer periphery of the shank 34 and extends from the front segment 38 toward the head 32. In this embodiment, the thread 36 extends to the rear segment 40 from a front end 46 of the front segment 38. The thread 36 includes a plurality of thread convolutions 48 and has a major diameter C that is greater than the shank diameter D. Each thread convolution 48 has a thread height HI (that is, the distance between the crest and the root of the thread convolution 48, normal to the longitudinal axis X), and a pitch P is defined between two adjacent convolutions 48.

The screw 30 further includes a plurality of first bump units 50 which are distributed on at least the front segment 38 of the shank 34 and spaced around the shank 34 circumferentially. Each first bump unit 50 includes a plurality of bumps 52 spaced and staggered along the longitudinal axis X. The plurality of bumps 52 of each first bump unit 50 constitute an inclined pattern (or a helical pattern) relative to the longitudinal axis X, as shown in reference sign 54 in FIG. 2. In this embodiment, the inclined pattern 54 extends in an upward direction which is identical to an upward spiral direction (right-handed helix) of the thread 36. Alternatively, the inclined pattern 54 extends in an upward direction which is opposite to the upward spiral direction of the thread 36. In this embodiment, each first bump unit 50 includes three spaced bumps 52 (FIG. 2), and each bump 52 extending along the longitudinal axis X has a bump length L in a direction of the longitudinal axis X which is less than the pitch P. Moreover, each bump 52 protrudes from the periphery of the shank 34 in the radial direction of the shank 34 and has a bump height H2 less than the thread height HI. In this embodiment, each bump 52 includes a rectangular bottom 56 and a conic tip 58.

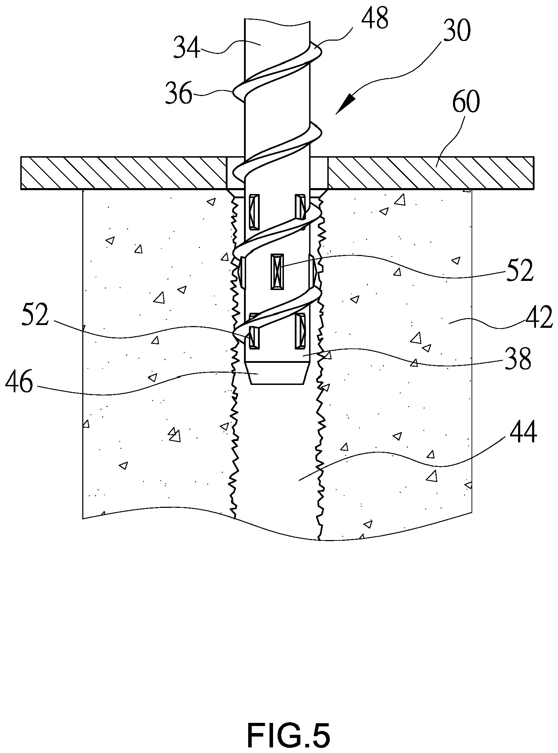

In practice, the front end 46 of the shank 34 is inserted into the predrilled hole 44 in the concrete structure 42 as shown in FIG. 5. Then, the head 32 is driven to rotate by a tool (not shown in FIG. 5), and the thread 36 on the shank 34 cuts the inner wall in the hole 44 for well screwing the shank 34 into the hole 44 and combining a board 60 on the concrete structure 42. In the course of the shank 34 being driven into the hole 44, the inner wall in the hole 44, uneven and coarse, is polished by the bumps 52 on the front segment 38 for pulverizing concrete debris, protecting the thread convolutions 48 from abrasion due to the coarse inner wall and irregular debris in the drilled hole 44, and preventing the shank 34 which has been driven into the hole 44 deeply from blockage by the concrete debris. Specifically, after the hole 44 is drilled, although the pre-drilled hole 44 can be cleaned by a vacuum cleaner, the inner wall of the hole 44 is still coarse and uneven in virtue of frictions between debris.

Accordingly, after the concrete structure 42 is cut by the thread convolutions 48, a great deal of waste debris easily attaches to the uneven and high-roughness inner wall of the predrilled hole 44 due to relatively large frictions, which will negatively affect the cutting course of the thread 36. According to the screw 30 of the present invention, in the course of the shank 34 being driven into the hole 44, irregular debris attaching to the hole wall of the hole 44 is further pulverized by the bumps 52 on the front segment 38 which contacts or approaches the hole wall for no intermittent accumulation, so that the thread convolutions 48 cut the inner wall of the hole 44 smoothly for reduced frictions, no concrete structure 42 fractured, and good fastening strength of the screw 30. Furthermore, because the plurality of bumps 52 of each first bump unit 50 are staggered on the shank 34 along the longitudinal axis X and form an inclined pattern 54 or a helical pattern with respect to the longitudinal axis X, the bumps 52 that form the inclined pattern 54 also have the function of restricting the free movement of debris in the course of the shank 34 being driven into the hole 44, so that both debris pulverized by the bumps 52 and waste debris from the hole wall cut by the thread 36 are constantly accumulated in the segment on which the bumps 52 are provided to create a pressing effect in the concrete structure 42 and improve the anti-pullout strength of the screw 30.

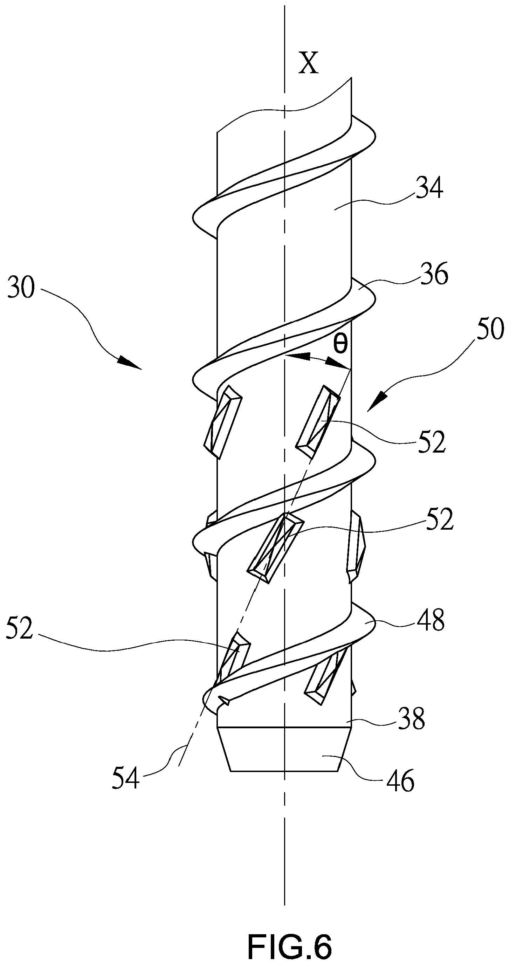

FIG. 6 illustrates a concrete screw 30 according to a second embodiment of the present invention. In this embodiment, the extension direction of the bump 52 of each first bump unit 50 is at an inclination angle θ with respect to the longitudinal axis X, and the inclination angle θ is approximately equal to the inclination angle of the inclined pattern 54 relative to the longitudinal axis X. Moreover, the inclination angle *θ* of the bump 52 can be inclined to the right or to the left, and is preferably in the range of 0-45 degrees.

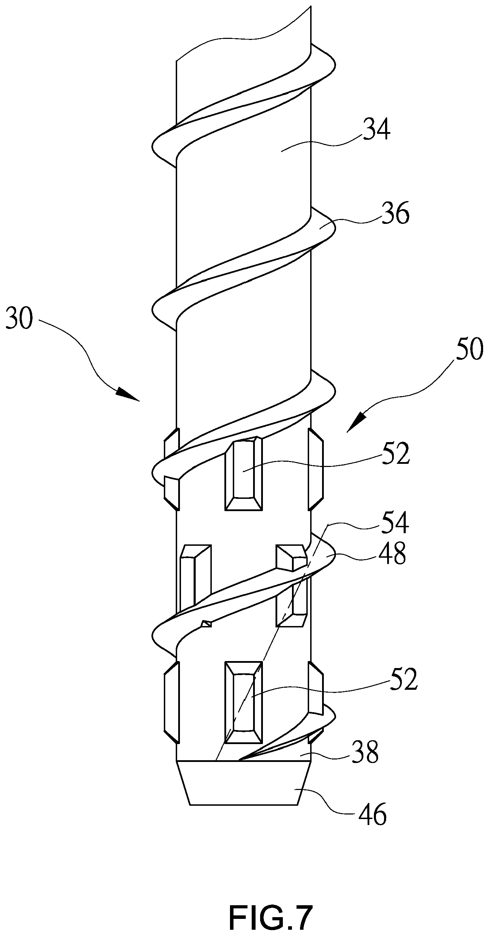

FIG. 7 illustrates a concrete screw 30 according to a third embodiment of the present invention. In this embodiment, the bump 52 of each first bump unit 50 constitutes a rectangular body and has a flat plane on the top thereof.

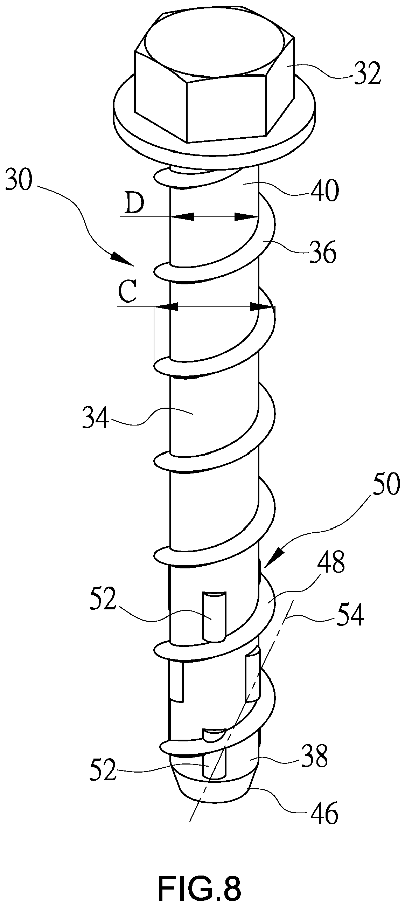

FIG. 8 illustrates a concrete screw 30 according to a fourth embodiment of the present invention. In this embodiment, the bump 52 of each first bump unit 50 constitutes an arch and has a cambered surface on the top thereof.

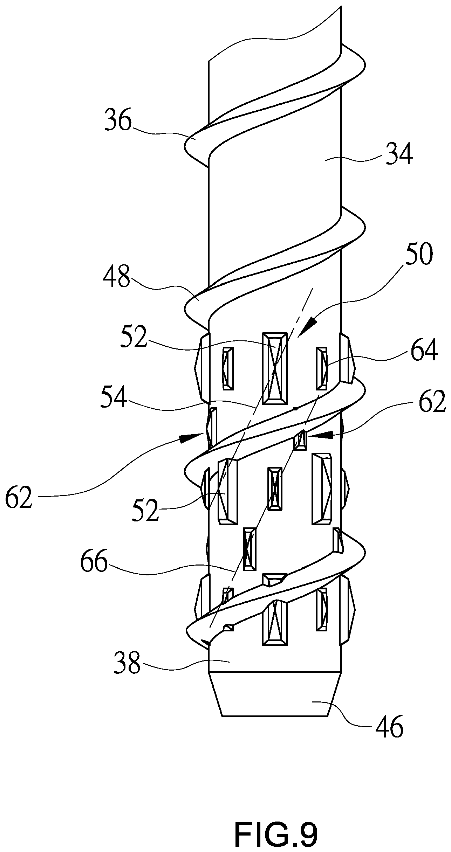

FIG. 9 illustrates a concrete screw 30 according to a fifth embodiment of the present invention. In this embodiment, the screw 30 further includes a plurality of second bump units 62 which are spaced around the shank 34 circumferentially and distributed among the plurality of first bump units 50. Each second bump unit 62 includes a plurality of bumps 64 spaced and staggered along the longitudinal axis X for development of an inclined pattern or a helical pattern relative to the longitudinal axis X, as shown in reference sign 66 in FIG. 9. The inclination angle and/or tilt direction of the inclined pattern 66 can be equal to or not equal to the inclination angle and/or the tilt direction of the inclined pattern 54. In this embodiment, the inclination angle and tilt direction of the inclined pattern 66 is equal to the inclination angle and the tilt direction of the inclined pattern 54. Furthermore, the bump 64 features its shape identical to the shape of the bump 52 but its size (e.g., bump length) less than the size of the bump 52 of the first bump unit 50. In a feasible embodiment, the bump 64 features its shape different from the shape of the bump 52. Based on the configurations of the first bump units 50 and the second bump units 62, concrete debris can be effectively pulverized and unrestricted movement of concrete debris is subdued, so that the screw 30 can exert a good pressing effect in the concrete structure 42.

The scope of the invention is to be indicated by the appended claims, rather than by the foregoing description, and all changes which come within the meaning and range of equivalency of the claims are intended to be embraced therein.

## Claims

1. A screw (30) is adapted to be driven into a hole (44) in a concrete structure (42), with the screw (30) comprising:
a head (32);
a shank (34) extending from the head (32) and defining a longitudinal axis (X), with the shank (34) including a front segment (38) and a rear segment (40) spaced from the front segment (38) along the longitudinal axis (X) and located between the front segment (38) and the head (32);
a thread (36) spirally formed on the shank (34) and including a plurality of thread convolutions (48), with each thread convolution (48) having a thread height (HI); and
a plurality of first bump units (50) distributed on at least the front segment (38) of the shank (34) and spaced around the shank (34) circumferentially, with each first bump unit (50) including a plurality of bumps (52) spaced and staggered along the longitudinal axis (X), with each bump (52) protruding from a periphery of the shank (34) in a radial direction of the shank (34) and having a bump height (H2) in the radial direction, with the bump height (H2) is less than the thread height (H1).

2. The screw (30) as claimed in claim 1, wherein the plurality of bumps (52) of each first bump unit (50) constitutes an inclined pattern (54) or a helical pattern relative to the longitudinal axis (X).

3. The screw (30) as claimed in claim 2, wherein a pitch (P) is defined between two adjacent thread convolutions (48), with each bump (52) extending along the longitudinal axis (X) and having a bump length (L) in a direction of the longitudinal axis (X) which is less than the pitch (P).

4. The screw (30) as claimed in claim 2, wherein an extension direction of the bump (52) of each first bump unit (50) is at an inclination angle (θ) with respect to the longitudinal axis (X), and the inclination angle (θ) of the bump (52) is approximately equal to an inclination angle of the inclined pattern (54) relative to the longitudinal axis (X).

5. The screw (30) as claimed in claim 1, wherein each bump (52) includes a rectangular bottom (56) and a conic tip (58).

6. The screw (30) as claimed in claim 1, further comprising:
a plurality of second bump units (62) which are spaced around the shank (34) circumferentially and distributed among the plurality of first bump units (50), with each second bump unit (62) including a plurality of bumps (64) spaced and staggered along the longitudinal axis (X) for development of an inclined pattern (66) or a helical pattern relative to the longitudinal axis (X).

7. The screw (30) as claimed in claim 6, wherein the bump (64) of the second bump unit (62) has a shape different from a shape of the bump (52) of the first bump unit (50).

8. The screw (30) as claimed in claim 6, wherein the bump (64) of the second bump unit (62) has a size different from a size of the bump (52) of the first bump unit (50).
